Europäisches Patentamt

(19) European Patent Office (11) Numéro de publication: **0 017 597**

Office européen des brevets **B1**

(12) **FASCICULE DE BREVET EUROPEEN**

(45) Date de publication du fascicule du brevet: **02.11.83** (51) Int. Cl.³: **B 64 G 1/10**

(21) Numéro de dépôt: **80400474.5**

(22) Date de dépôt: **09.04.80**

(54) **Système d'observation terrestre par satellites.**

(30) Priorité: **10.04.79 FR 7909027**

(43) Date de publication de la demande:
**15.10.80 Bulletin 80/21**

(45) Mention de la délivrance du brevet:
**02.11.83 Bulletin 83/44**

(84) Etats contractants désignés:
**AT CH DE GB IT LI SE**

(56) Documents cités:
**US - A - 3 836 969**

**PROCEEDINGS OF THE IEE, vol. 119, no. 8R,
août 1972, pages 929-955, Stevenage, G. B.
BACK et al.: "Commercial Satellite
Communication"
RADIO MENTOR ELECTRONIC, vol. 41, no. 7,
1975, pages 282-283, München, DE. "Sechs
Fragen nach der Zukunft der
Nachrichtensatelliten"**

(73) Titulaire: **SOCIETE NATIONALE INDUSTRIELLE
AEROSPATIALE
37 boulevard de Montmorency
F-75016 Paris Cedex 16 (FR)**

(72) Inventeur: **Mortelette, André
72 Boulevard Carnot
F-06110 Le Cannet (FR)**

(74) Mandataire: **Rinuy, Guy et al,
Cabinet Rinuy et Santarelli 14, Avenue de la
Grande Armée
F-75017 Paris (FR)**

Courier Press, Leamington Spa, England.

Système d'observation terrestre par satellites

L'invention concerne les satellites terrestres et plus particulièrement les satellites d'observation destinés par exemple à la prévision météorologique. Les satellites terrestres utilisés en particulier pour une observation météorologique globale sont positionnés sur des orbites circulaires situées dans le plan de l'équateur et à une altitude telle que la période de révolution soit égale à la période de rotation de la terre. Dans ces conditions, le satellite occupe une position fixe par rapport à la terre de latitude égale à zéro, de longitude pouvant être choisie quelconque et d'altitude voisine de trente six mille kilomètres, l'orbite correspondante est dite géostationnaire. A partir de ce satellite, la surface visible de la terre est une calotte sphérique définie par le cône dont le sommet est au centre de la terre, l'axe dirigé vers le satellite et la demi-ouverture est de 81°. Toutefois, en raison de l'inclinaison des rayons de visée en bordure de la calotte sphérique, l'observation s'effectue habituellement à l'intérieur d'un cône dont la demi-ouverture est d'environ 60°. En plaçant un nombre approprié de satellites géostationnaires à des longitudes convenablement réparties, il est possible d'obtenir une image de l'ensemble de la terre, sauf des zones situées aux latitudes supérieures à 81° et dans des conditions d'observation difficiles dans les zones situées entre 60° et 81° de latitude.

Les satellites du réseau G.A.R.P. (Global Atmospheric Research Program) placé sous l'égide de l'Organisation Mondiale Météorologique sont bien représentatifs d'un tel mode d'observation. Il doit être mentionné à cet égard que la plupart de ces satellites sont stabilisés gyroscopiquement; c'est le cas de METEOSAT pour L'EUROPE, de SMS et GOES pour les ETATS-UNIS D'AMERIQUE et de GMS pour le JAPON. Tous ces satellites sont munis de dispositifs à balayage séquentiel permettant une exploration ligne à ligne de la surface à observer, grâce à un miroir orientable.

L'impossibilité d'observer les régions polaires dont il a été fait mention précédemment constitue un inconvénient préjudiciable en raison du rôle économique important de ces régions, notamment du point de vue des transports aériens et maritimes, de la pêche hauturière et de l'influence particulièrement importante des masses d'air froid se déplaçant des régions polaires vers les régions tempérées.

Une solution consiste à observer les zones polaires au moyen de satellites dits à défilement; de tels réseaux ont été réalisés avec des satellites en orbites basses, d'altitudes situées entre 500 et 1500 kilomètres, d'inclinaison voisine de 90°. Ces satellites tels que ERTS, LANDSAT, ITOS, TIROS, dont le but n'est pas précisément l'observation météorologique mais plus généralement l'observation terrestre, répondent à cet objectif.

Toutefois, ces satellites ne peuvent observer que d'étroites bandes de terre à chaque révolution et l'image qu'ils fournissent est un long ruban dont la largeur est de quelques centaines de kilomètres au maximum. Il faut à l'aide d'un traitement mathématique approprié reconstituer une image globale dont les différentes parties correspondent à des dates de prise de vue différentes, ce qui est un inconvénient rédhibitoire en matière de météorologie.

Pour réaliser une observation globale de la terre suivant le principe de la solution précitée, il faut utiliser deux types de satellites, l'un géostationnaire et l'autre à défilement. Les inconvénients résultant de cette solution sont nombreux, entre autres:

— les distances d'observation: 36000 km pour l'un et environ 100 km pour l'autre nécessitent des dispositifs de prise de vue différents.
— les modes d'observation de l'axe de visée, lequel, dans un cas, doit rester fixe par rapport à la terre, c'est-à-dire faire un tour en 24 heures, et, dans l'autre cas, doit rester asservi à la verticale locale donc faire entre 10 et 20 tours par jour, ce qui nécessite des systèmes de contrôle d'attitude différents.
— la direction du soleil, qui avec un satellite géostationnaire oscille annuellement d'environ $\pm 23°4$ autour du plan équatorial du véhicule alors qu'un satellite à défilement fait à chaque orbite une révolution de 360° par rapport à la direction du rayonnement solaire, nécessite donc des systèmes de captage d'énergie solaire et des systèmes de régulation thermique totalement différents.

La présente invention vise à pallier ces inconvénients et a pour objet un système d'observation terrestre adapté, au moyen d'au moins trois satellites sensiblement identiques stabilisés en attitude, à assurer la couverture géographique d'une vaste portion du globe terrestre, incluant en particulier les zones polaires arctiques et antarctiques, avec possibilité d'exploration en stéréographie d'une région limitée de cette zone, qui est la région d'observation commune de deux satellites voisins.

Selon l'invention, il est fait usage d'un système comportant au moins trois satellites structurellement identiques, mais dont l'un au moins est en orbite géostationnaire à environ 36000 km, tandis que deux autres au moins sont en orbite géosynchrone, c'est-à-dire sur une orbite circulaire de rayon de 36000 km environ mais dont le plan orbital est le symétrique du plan de l'équateur par rapport au plan de l'écliptique, ce qui conduit à une orbite d'inclinaison $i=23,4° \times 46,8°$ et à une ascension droite du noeud ascendant Ω=0°. Une telle orbite est alors dénommée "anti-équatoriale".

Une disposition analogue de satellites apparaît dans les "Proceedings of IEE", vol 19, N° 8R, August 1972, p. 932—933, à propos de satellites de communications suivant simultanément des orbites géostationnaires et des orbites géosynchrones. Il y est envisagé une gamme d'inclinaison des orbites géosynchrones allant jusqu'à 40°. Etant donné que l'article se rapporte aux satellites de télécommunications et à l'optimisation de leur répartition, l'inclinaison de 20° semble retenir particulièrement l'attention des auteurs, parce qu'elle permet une équirépartition des satellites et une hauteur suffisante au-dessus de l'horizon des stations de réception.

Une trajectoire géosynchrone inclinée selon l'invention de 47° environ présente cependant l'avantage d'être le symétrique de la trajectoire équatoriale, par rapport au plan de l'écliptique, ce qui présente l'intérêt de pouvoir utiliser pour les divers satellites des senseurs d'orientation solaires, terrestres ou stellaires, identiques et d'avoir des configurations thermiques également identiques.

Compte tenu de ce que, en outre, les orbites géostationnaire et géosynchrone ont même altitude, les moyens d'observation optique peuvent avoir les mêmes caractéristiques (focale, champ, défilement). La disposition préconisée par l'invention permet donc d'utiliser des satellites sensiblement identiques sur les orbites géosynchrones et géostationnaires.

Toute combinaison de trajectoires géosynchrones présentant une symétrie par rapport au plan de l'écliptique bénéficie de ces mêmes caractéristiques. Cependant, il n'existe qu'une seule combinaison utilisant un satellite géostationnaire. Cette combinaison est préférée, par suite des avantages de l'orbite géostationnaire et de l'orbite anti-équatoriale associée qui permettent d'avoir, d'une part, une couverture géographique équatoriale fixe et d'autre part, une couverture polaire périodique (zones arctiques et antarctiques).

Conformément à l'invention le système ayant au moins trois satellites structurellement identiques dont l'un est stabilsé sur une orbite géostationnaire et au moins deuse autres sont stabilisés sensiblement sur une même orbite géosynchrone antiequatonale de même longitude moyenne que celle de l'orbite géostationnaire est tel que les satellites antiéquatoriaux sont couvenablement décalés en anomalie pour assurer une exploration stéréographique d'une zone limitée correspondant au champ couvent simultanément pour au moins deux desdits satellites.

L'invention sera de toute manière bien comprise dans la suite du présent exposé qui va donc décrire, à titre d'exemple et à l'appui des dessins annexés, les différentes possibilités résultant de la mise en oeuvre de l'invention.

Sur ces dessins:

la figure 1 est une vue schématique représentant un satellite géostationnaire positionné au solstice d'hiver, la situation au solstice d'été étant bien entendu symétrique;

la figure 2 est une vue schématique représentant les régions du planisphère, vues par un réseau de quatre satellites géostationnaires;

la figure 3 est une vue schématique représentant la trajectoire d'un satellite géosynchrone en configuration sensiblement anti-équatoriale;

la figure 4 est une vue schématique représentant la trace terrestre de la trajectoire d'un satellite géosynchrone anti-équatoriale;

la figure 5 est une vue schématique représentant la zone de visibilité d'un satellite géostationnaire unique, positionné selon L=0 et I=0;

la figure 6 est une vue schématique représentant la région du planisphère vue par l'observation conjointe d'un satellite géosynchrone et d'un satellite géostationnaire;

la figure 7 est une vue schématique représentant en perspective un système à un satellite géostationnaire et à une satellite géosynchrone anti-équatorial; et

la figure 8 est une vue schématique représentant en perspective les moyens utilisés pour la mise en oeuvre de l'invention en exploration équatoriale stéréographique.

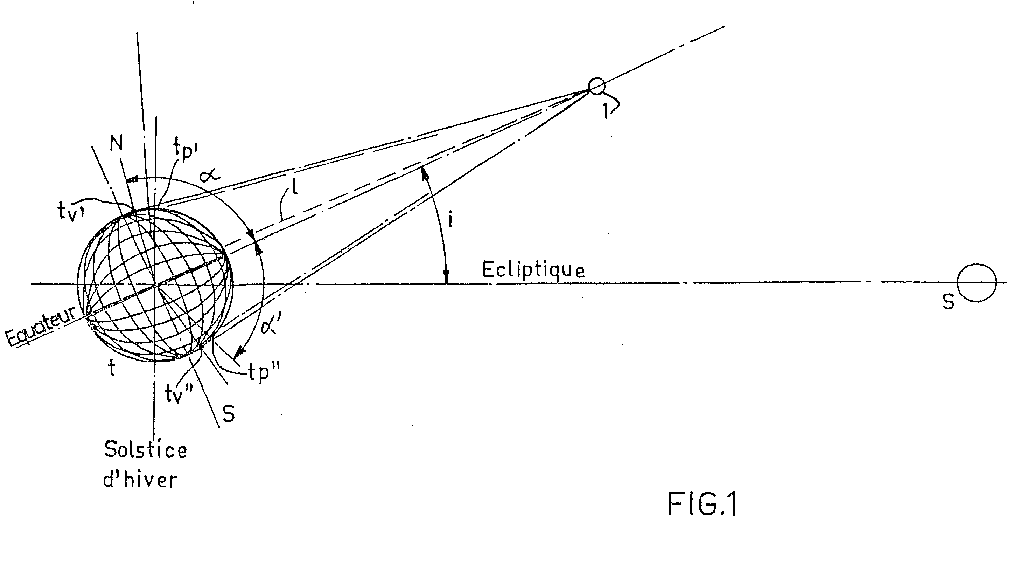

La figure 1 représente un satellite 1 en position géostationnaire à environ 36,000 km, dans le plan de l'équateur à 12 heures locales au solstice d'hiver, l'angle $i$ du plan de l'équateur avec le plan de l'écliptique est de 23,4° environ. On sait que pour ce satellite la surface visible de la terre est une calotte sphérique déjà définie, dont le demi-angle d'ouverture est de 81°, d'où les points limites de visibilité $t_v$, et $t_v''$, indiqué sur cette figure 1. On sait également que les points de visibilité pratique doivent être rapprochés de l'équateur en $t_p'$ et $t_p''$ pour éviter les observations trop rasantes d'un intéret pratique très réduit, le demi-angle d'ouverture correspondant e'tant d'environ 60°.

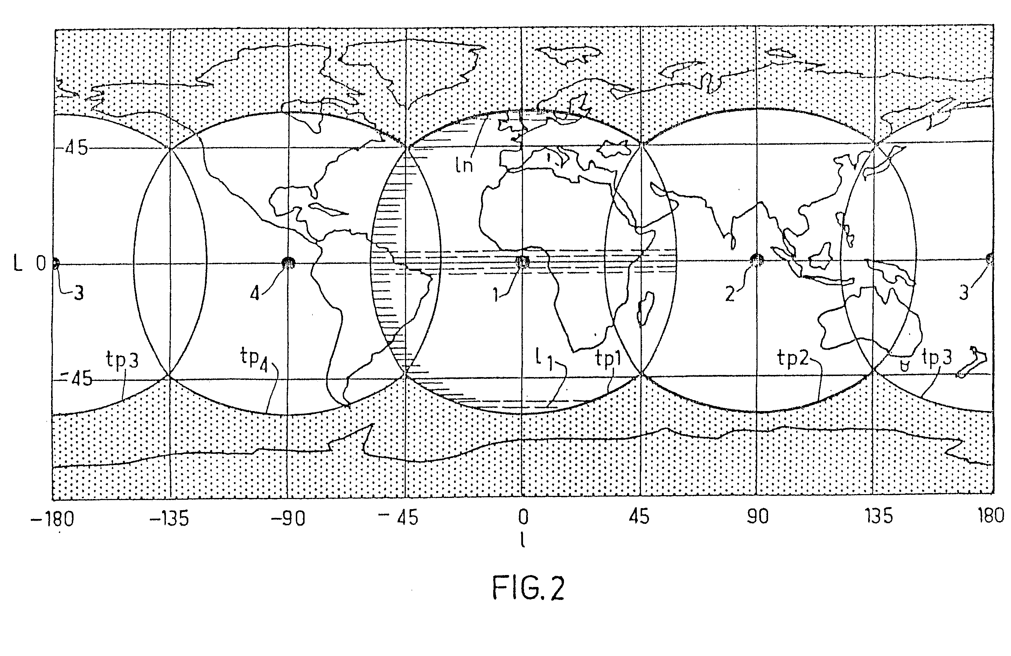

La figure 2 montre sur un planisphère les zones vues par quatre satellites géostationaires repérés 1, 2, 3 et 4, équirépartis en longitude. La visibilité est bonne pour les régions équatoriales et tropicales, partielle pour les zones tempérées et nulle pour les zones polaires.

Il doit être précisé que l'observation terrestre s'effectue pratiquement par balayage séquentiel ligne par ligne, telle que $l_1...l_n$, et que ceci est réalisé à bord de chaque satellite à partir de la rotation de celui-ci ou bien par déplacement du dispositif optique, lorsque le satellite est stabilisé selon trois axes.

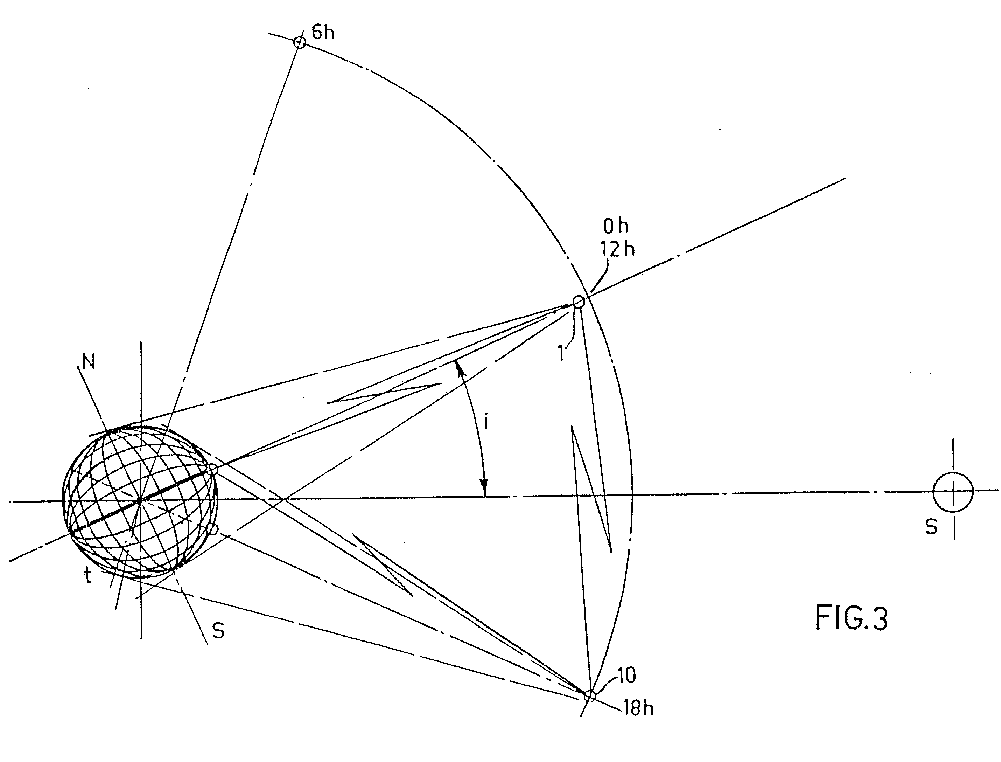

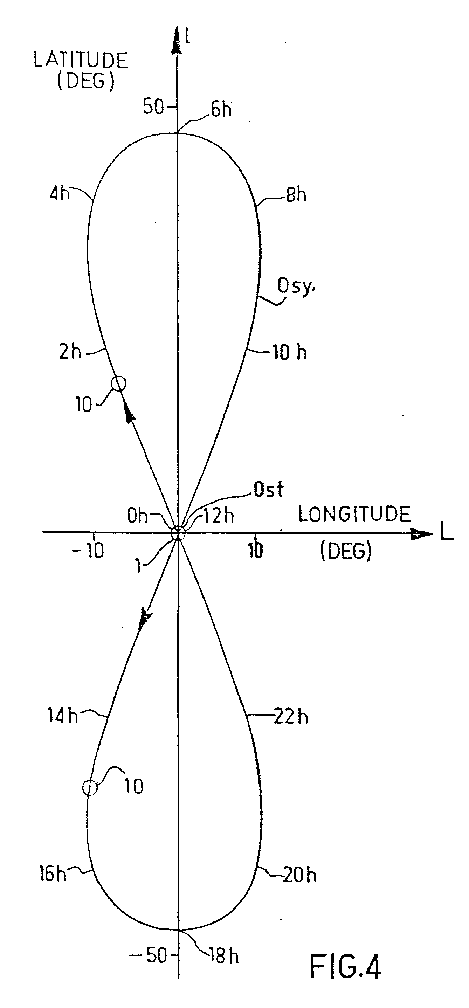

Sur la figure 3 est représenté en 10 l'un des satellites géosynchrones d'un système selon l'invention. Il est sur une orbite dont le plan est sensiblement symétrique du plan de l'équateur par rapport au plan de l'écliptique dans une configuration anti-équatoriale, ce qui conduit à une trajectoire en 8 semblable à celle dont la trace repérée $O_{sy}$ est représentée sur la figure 4. Des moyens de prise de vue issus à la fois du satellite géostationnaire 1 et du satellite géosynchrone 10 qui comporte un système de balayage ligne semblable à celui dudit satellite géostationnaire permettent, après transmission au sol, l'examen d'une zone terrestre beaucoup plus importante que celle pouvant être observée par le satellite géostationnaire seul, disposé à la même longitude de référence, c'est-à-dire en 1.

En effet, si l'on suppose selon la figure 3 que le satellite géosynchrone 10 dispose de ses propres moyens d'exploration de la surface terrestre et de ses moyens propres de transmission au sol de ses informations, identiques en cela à ce que comporte le satellite géostationnaire repéré 1, de la sorte, conformément aux lois de la mécanique, ce satellite 10 va osciller en 24 heures de part et d'autre du plan équatorial et sa trace sur la terre sera représentée par la courbe repérée Osy de la figure 4, les sommets étant situés à 46,8° de latitude nord et sud. De la sorte et en supposant les satellites 1 et 10 positionnés à O heure en O (longitude=O, latitude=O), on peut déduire les heures de positionnement du satellite 10 dans la journée, la satellite 1 restant toujours au même point O.

Il est toujours possible d'établir exactement les équations de cette trace de la figure 4 qui sont:

Latitude l=Arc sinus (sin i sin $\theta$)

Longitude L=Arc tangente (cos i tg $\theta$)$-\theta$ où $i=$ inclinaison et $\theta=15,04$ t, $t=$temps en heure.

Ces relations sont valables pour $O<\theta<90°$. Pour $90°<\theta<180°$ et pour $270°<\theta<360°$ il faut changer L en $-$L.

Pour $180°<\theta<360°$ il faut changer l en $-$l.

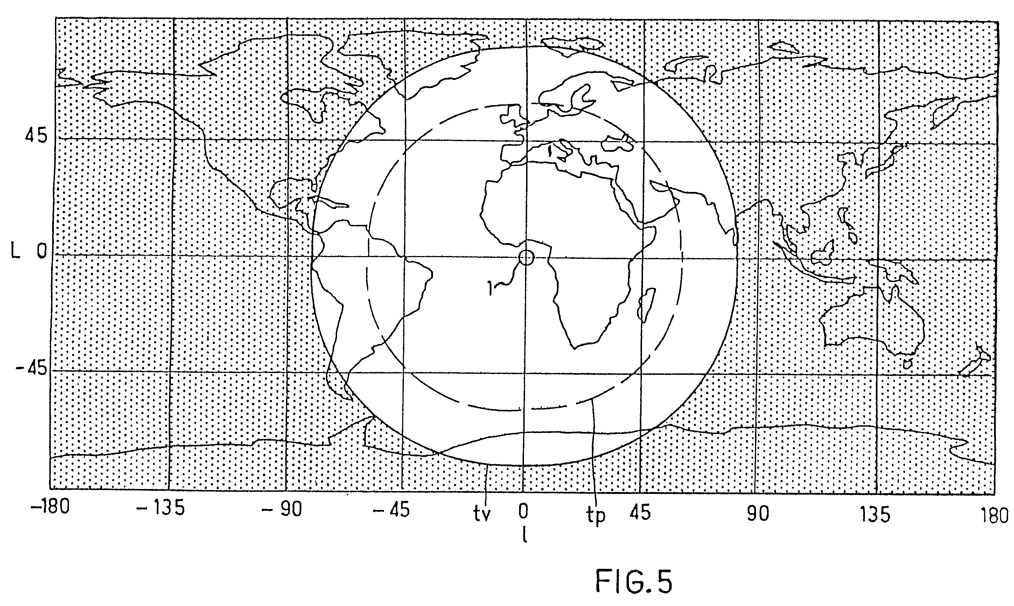

Comme il a été indiqué précédemment à l'appui de la figure 2, la zone pratique de visibilité $t_p$ d'un satellite géostationnaire peut généralement être considérée comme inférieure à 60°, tandis que, selon la figure 5, la zone située entre $t_p-60°$ et $t_v-81°$ reste une zone difficilement observable dépendant en tout état de cause des moyens mis en oeuvre pour effectuer cette observation.

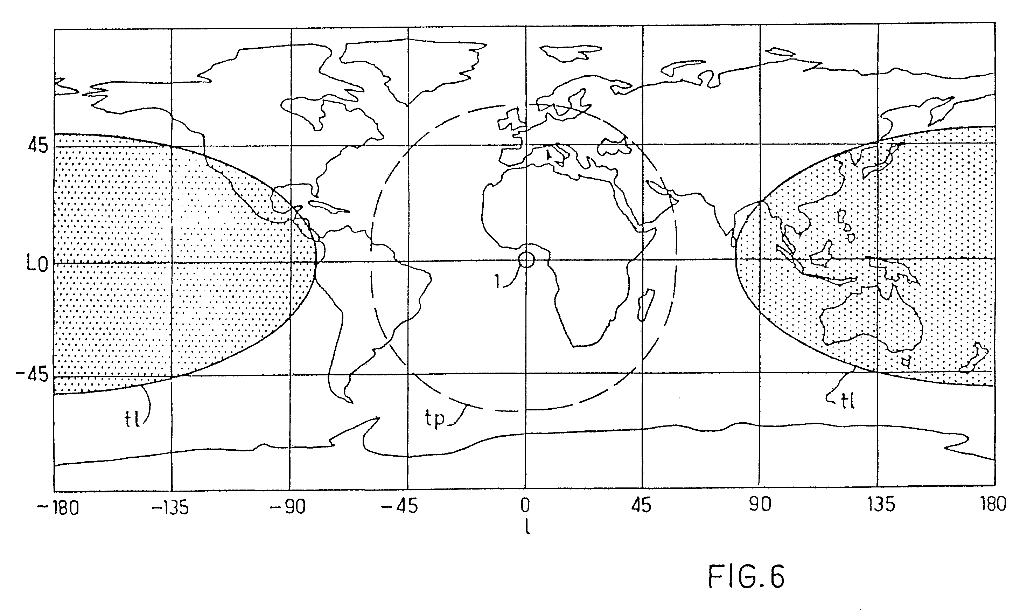

Par contre la zone limite vue par un satellite géosynchrone positionné comme il vient d'être indiqué et qui est représentée par le tracé repéré tl sur la figure 6, peut permettre l'observation quasi-totale de la terre au moins chaque période de 24 heures en association avec des satellites géostationnaire et cette observation peut être transmise au sol à l'aide des moyens de transmission usuels en ce domaine.

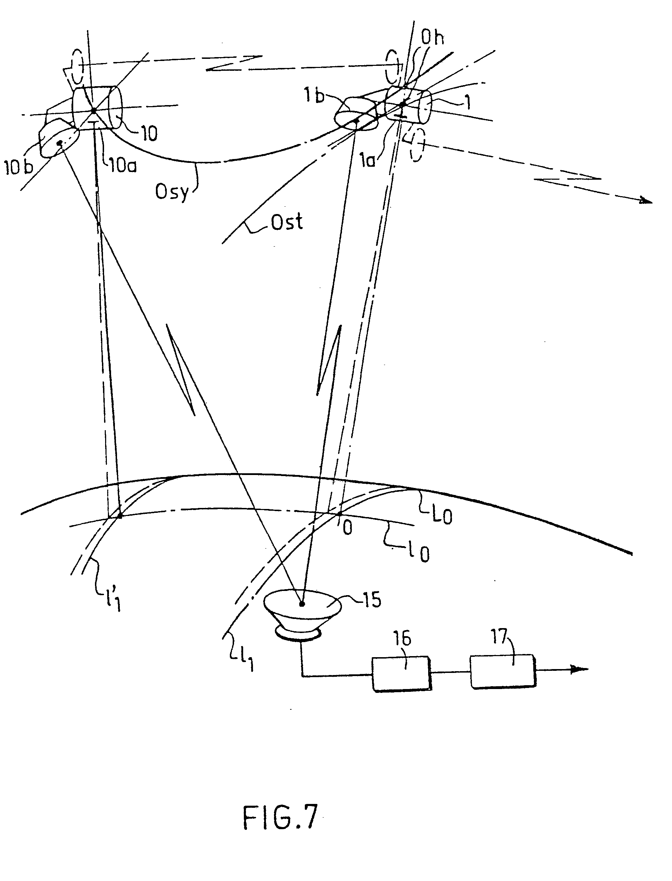

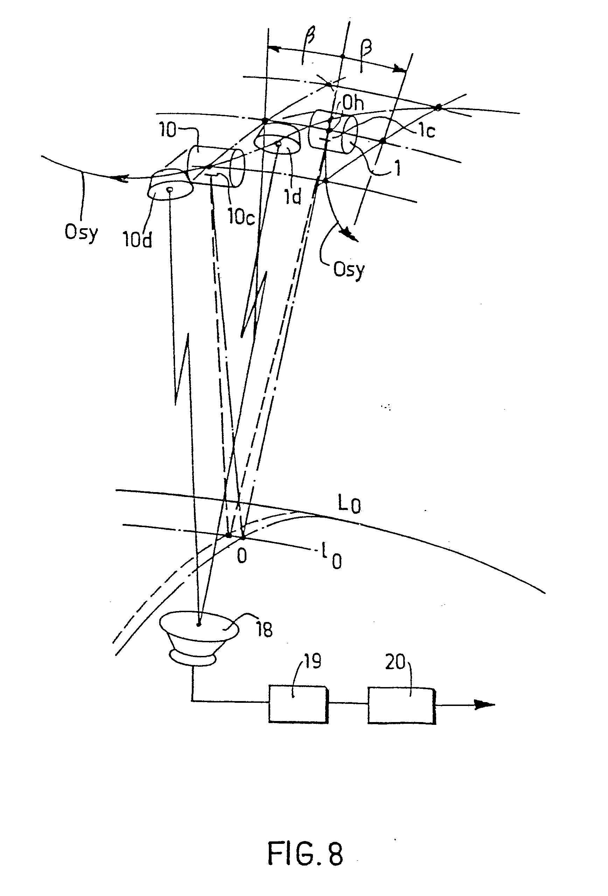

La mise en oeuvre pratique de l'invention ressort de l'examen de la figure 7 et de la figure 8.

Dans la première application selon la figure 7 et en premier lieu, il est connu que la position précise d'un satellite sur une orbite à altitude constante est connue au sol en permanence et que la direction de l'axe moyen de visée est calculée au sol à partir des informations d'attitude que le satellite envoie en permanence au sol.

Ces informations permettent toujours de déterminer la position angulaire d'un trièdre lié au satellite par rapport à un trièdre lié à la terre.

La loi de balayage, c'est-à-dire le positionnement du faisceau explorateur en fonction du temps est connue car la loi de déplacement du miroir du satellite est également connue.

L'exploration de la surface terrestre que peuvent fournir conformément à l'invention les deux satellites repérés 1 et 10 sur la figure 7 nécessite, d'une part, des moyens d'exploration 1a et 10a présents normalement sur les satellites mêmes et, d'autre part, des moyens de transmission à bord des mêmes satellites et qui peuvent être fournis par des antennes 1b et 10b dont l'orientation peut être obtenue non exclusivement mais avantageusement par application de la demande de brevet français de la Demanderesse n° 2.451.595.

Les moyens d'exploration par balayage 1a ou 10a peuvent mettre en oeuvre soit un premier système résultant de la rotation du satellite utilisé pour sa stabilisation propre, soit un deuxième système résultant d'un dispositif séquentiel ligne par ligne lorsque le satellite est stabilisé selon trois axes.

Les informations issues du balayage lignes sont reçues au sol à travers une antenne 15 et les signaux sont traités par des installations au sol comportant essentiellement une chaîne de réception et une chaîne de traitement schématisées en 16 et 17 sur cette figure 7.

Il doit être noté que la chaîne de transmission présentement indiquée peut être de nature différente directe ou indirecte en ce sens que les deux satellites peuvent être reliés eux-mêmes par voie hertzienne et en ce cas une seule antenne est utilisée pour les liaisons sol de même que les deux satellites peuvent être reliés à un troisième satellite de liaison sol pouvant comporter de plus les dispositifs de traitement des données.

Si l'on considère selon la figure 7 les deux satellites 1 et 10 en orbite respective selon Ost et Osy à l'instant O heure où leurs coordonnées connues projetées sur la terre sont indiquées par longitude l=O et latitude L=O, leur balayage lignes va les conduire à explorer toute la zone $t_p$ et $t_l$ de la figure 6 et la transmission des données au sol permet, après correction éventuelle des déformations de lignage résultant notamment de la translation en latitude du satellite 10, de reconstituer une image convenable de toute cette région.

Selon la figure 8, le processus d'exploration stéréographique que permet l'exploration conjointe des balayages lignes synchrones des deux satellites 1 et 10, ressort de la mise en oeuvre des systèmes de balayage 1c et 10c et des antennes 1d et 10d transmettant à l'antenne au sol 18 les informations, lesquelles sont traitées par les chaînes de réception et de traitement schématisées en 19 et 20 de telle sorte qu'il soit possible de faire des observations de l'épaisseur de la couche atmosphérique, ce qui nécessitait antérieurement des images beaucoup plus complexes et délicates à mettre en oeuvre.

Il doit toutefois être noté que ce procédé d'exploration stéréographique est, pour des raisons évidentes d'éloignement de l'équateur du satellite géosynchrone 10, limité angulairement à une valeur $\beta$ de l'ordre de 30° de part et d'autre dudit équateur.

L'invention vise l'utilisation conjointe d'au moins trois satellites stabilisés en attitude dont l'un au moins est en orbite géostationnaire et deux autres au moins en orbite géosynchrone, ladite orbite géosynchrone étant sensiblement anti-équatoriale, c'est-à-dire dans une configuration selon laquelle son plan est le symétrique du plan de l'équateur par rapport au plan de l'écliptique, des moyens de balayage lignes étant prévus sur lesdits satellites pour fournir au sol, après traitement convenable des images de type stéréographique de zone oscillant entre les zones polaires.

De même, l'invention nécessite la mise en oeuvre d'au moins trois satellites, l'un sur orbite géostationnaire, deux autres sur orbite géosynchrone, mais il est évident que ces trois satellites pourraient être mis en oeuvre conjointement avec un nombre quelconque d'autres satellites sur orbite géosynchrone et/ou en orbite géostationnaire dans le cas, notamment, où une couverture d'observation totale de la surface terrestre serait nécessaire.

Il est bien entendu, d'ailleurs, que la présente invention n'a été décrite et représentée qu'à titre d'exemple préférentiel.

## Revendication

Système d'observation terrestre, du genre comportant un ensemble d'au moins trois satellites stabilisés en attitude positionnés selon des orbites soit géostationnaires, soit géosynchrones, caractérisé en ce que l'un au moins desdits satellites (1) est stabilisé sur une orbite géostationnaire, qu'au moins deux autres satellites géosynchrones (10) sont stabilisés sensiblement sur une même orbite géosynchrone, anti-équatoriale, de même longitude moyenne que l'orbite géostationnaire précitée, sur laquelle ils sont convenablement décalés en anomalies et que ces satellites géostationnaire et géosynchrones, structurellement identiques, sont dotés de moyens d'exploration (1a, 10a) et de transmission (1b, 10b) similaires adaptés, en combinaison avec des moyens de réception et de traitement au sol (15, 16, 17), à assurer la couverture d'une vaste portion du globe terrestre incluant en particulier les zones polaires arctiques et antarctiques, ainsi qu'une exploration en stéréographie d'une zone limitée correspondant au champ couvert simultanément par au moins deux desdits satellites.

## Patentanspruch

Erdbeobachtungssystem mit einer Gesamtheit von mindestens 3 in teils geostationären, teils geosynchronen Umlaufbahnen lagestabilisierten Satelliten, dadurch gekennzeichnet, daß mindestens einer der Satelliten (1) in einer geostationären Umlaufbahn stabilisiert ist, während mindestens zwei andere geosynchrone Satelliten (10) etwa in einer gleichen geosynchronen, anti-äquatorialen Umlaufbahn mit der gleichen mittleren Länge wie die genannte geostationäre Umlaufbahn stabilisiert sind, in der sie passend anomal versetzt sind, und daß die in ihrem Aufbau identischen geostationären und geosynchronen Satelliten mit gleichartig ausgelegten Erkundungseinrichtungen (1a, 10a) und Sendeinrichtungen (1b, 10b) versehen sind, um in Kombination mit Boden-Empfangs- und Verarbeitungseinrichtungen (15, 16, 17) die Überdeckung eines weiten Bereiches der Erdkugel, insbesondere einschließlich der arktischen und antarktischen Polarzonen, und außerdem eine stereographische Erkundung einer begrenzten Zone entsprechend der gleichzeitig durch mindestens zwei der Satelliten überdeckten Bodenfläche sicherzustellen.

## Claim

An earth observation system of the type comprising a set of a least three attitude stabilized satellites positioned on either geostationary or geosynchronous orbits; characterized in that at least one of said satellites (1) is positioned on a geostationary orbit, in that at least two other geosynchronous satellites (10) are positioned substantially on one and the same synchronous anti-equatorial orbit of the same average longitude as said geostationary orbit, on which they are suitably offset as to anomalies, and in that these geostationary and geosynchronous structurally identical satellites are provided with similar scanning (1a, 10a) and transmission (1b, 10b) means adapted to ensure in combination with ground reception and processing means (15, 16, 17), the coverage of a large portion of the terrestrial globe including in particular the arctic and antarctic polar zones, as well as a stereographic exploration of a limited zone corresponding to the field simultaneously covered by at least two of said satellites.

FIG.1

FIG.2

FIG.3

FIG.4

FIG.6

FIG.7

FIG. 8